# EUROPÄISCHE PATENTSCHRIFT

(11) **EP 4 438 560 B1**
(45) Veröffentlichungstag und Bekanntmachung des Hinweises auf die Patenterteilung: **27.08.2025**
(21) Anmeldenummer: 23164738.9
(22) Anmeldetag: 28.03.2023
(51) Int. Cl.: C01F 7/56, C01B 25/32, C01G 49/10

(54) **VERFAHREN ZUR HERSTELLUNG VON EISENCHLORID UND ALUMINIUMCHLORID AUS KLÄRSCHLAMMASCHEN**
PROCESS FOR THE PREPARATION OF FERRIC CHLORIDE AND ALUMINIUM CHLORIDE FROM SEWAGE SLUDGE ASHES
PROCÉDÉ DE PRODUCTION DE CHLORURE FERRIQUE ET DE CHLORURE D'ALUMINIUM À PARTIR DE CENDRES DE BOUES D'ÉPURATION

(43) Veröffentlichungstag der Anmeldung: 02.10.2024
(73) Patentinhaber: LANXESS Deutschland GmbH, 50569 Köln (DE)
(72) Erfinder: BOLL, Matthias, 51061 Köln (DE)

(56) Entgegenhaltungen:
- CN-A- 109 336 352
- ADAM C ET AL: "Thermochemical treatment of sewage sludge ashes for phosphorus recovery", WASTE MANAGEMENT, ELSEVIER, NEW YORK, NY, US, vol. 29, no. 3, 1 March 2009 (2009-03-01), pages 1122 - 1128, XP025769686, ISSN: 0956-053X, [retrieved on 20081125], DOI: 10.1016/J.WASMAN.2008.09.011
- DAVID MARKUS MONTAG: "Phosphorru?ckgewinnung bei der Abwasserreinigung : Entwicklung eines Verfahrens zur Integration in kommunale Kla?ranlagen", 22 February 2008 (2008-02-22), XP055461446, Retrieved from the Internet <URL:http://darwin.bth.rwth-aachen.de/opus3/volltexte/2008/2298/pdf/Montag_David.pdf> [retrieved on 20180321]

## Beschreibung

Die Erfindung betrifft ein Verfahren zur Herstellung von Eisenchlorid und Aluminiumchlorid aus in Klärschlammaschen enthaltenen Eisen- und Aluminiumverbindungen.

Die Herstellung von Eisenchloriden wie Fe(II)Cl₂ und Fe(III)Cl₃ erfolgt meistens ausgehend von metallischem Eisen. Gleiches gilt für Aluminium, was ebenfalls aus elementarem Aluminium hergestellt wird. Es gibt aber zunehmend großvolumige eisen- bzw. aluminiumhaltige Verbindungen, die bislang als alternative Quelle zur Herstellung von entsprechenden Chloriden nicht im Fokus standen, wie etwa Klärschlammaschen.

Für manche Abfallstoffe mit eisenhaltigen Verbindungen ist Eisen ein Störelement, wenn es um die Wiederverwertung der Hauptbestandteile dieser Abfallströme geht. So ist hier insbesondere die Klärschlammasche zu nennen, die in der Regel aus einem hohen einstelligen bis mittleren zweistelligen Prozentanteil verschiedener Eisenverbindungen besteht (bezogen auf das elementare Eisen). In Wasser sind die Eisenverbindungen in der Regel sehr schlecht löslich, was die direkte Verwendung unrentabel macht. So ist beispielsweise in der Klärschlammasche vorhandenes Eisenphosphat selbst in höher konzentrierten Lösungen aus Phosphorsäure sehr schlecht löslich, was beispielsweise die Verwendung von hochgradig mit Eisenionen verunreinigten Phosphatdünger unwirtschaftlich macht.

Die Klärschlammasche bietet sich daher als weitere Quelle zur Herstellung von Eisenchloriden, als auch von Aluminiumchloriden, an.

Die Umsetzung von Phosphaten mit Chloriden der Alkali- und/oder Erdalkalimetalle wurde für den Anwendungsfall der Klärschlammasche mehrfach untersucht. Es wurde Klärschlammasche mit unterschiedlichen Alkali- oder Erdalkalichloriden gemischt und trocken an Luft erhitzt mit dem Ziel, die für den direkten Einsatz der Asche in der Agrarindustrie notwendige Schwermetallabreicherung durchzuführen.

So haben Christian Adam et. al., (Materials Transactions, Vol. 48, No. 12 (2007) pp. 3056 - 3061) über die trockene Umsetzung von Klärschlammasche mit Magnesiumchlorid bei Temperaturen bis 1000°C an Luft berichtet, wobei sie gemäß der Fig. 5 praktisch einen vollständigen Verbleib der Eisen- und Aluminium-Komponenten im Rückstand und damit keine Abreicherung an Aluminium und Eisen finden.

Auch Mattenberger et. al, in Waste Management 28 (2008) 2709-2722, haben Versuche zur Entfernung von Cd, Cr, Cu, Ni, Pb und Zn aus Klärschlammasche durch Zugabe von KCI oder MgCl₂ bei Temperaturen von über 900°C an Luft durchgeführt und ebenfalls von keiner Abreicherung von Eisen oder Aluminium berichtet.

Aufgabe der Erfindung war es daher, ein entsprechendes Verfahren ausgehend von aus in Klärschlammaschen enthaltenen Eisen- und Aluminiumverbindungen bereitzustellen.

Überraschend wurde nun ein Verfahren zur Herstellung von Eisen- und Aluminiumchloriden gefunden, das dadurch gekennzeichnet ist, dass man
i) eine Klärschlammasche enthaltend wenigstens eine Eisen- und Aluminiumverbindung mit wenigstens einem Alkalichlorid und/oder wenigstens einem Erdalkalichlorid bei einer Temperatur von 200 bis 1100°C in einer Inertgasatmosphäre, enthaltend vorzugsweise weniger als 200ppm Sauerstoff, umsetzt und
ii) das gebildete Eisenchlorid und Aluminiumchlorid im Abgasstrom ableitet und isoliert.

### Klärschlammasche

Bevorzugt wird unter Klärschlammasche sowohl der bei der Klärschlammverbrennung als auch der bei Klärschlammvergasung zur Erzeugung eines Brenngases anfallende feste Rückstand verstanden. Klärschlammasche kann unterschiedliche Bestandteile enthalten, wie vorzugsweise Aluminiumphosphate, Eisenphosphate wie Calciumeisenphosphate beispielsweise Ca₉Fe(PO₄)₇ oder Whitlockite Ca₃(PO₄)₂, Gips, Kalziumhydroxide, -oxide sowie -carbonate, Eisenoxide wie Hematite (Fe₂O₃),und Quarz (SiO₂), Indialite (Mg₂Al₄Si₅O,₁₈) um nur einige zu nennen.

Die Klärschlammasche enthält bevorzugt einen Anteil an Eisenverbindungen von 1 bis 21 Gew.-% (gerechnet als elementares Eisen) und einen Anteil an Aluminiumverbindungen von 0,7 bis 20,2 Gew.-%, gerechnet als elementares Aluminium.

Bevorzugt beträgt die Summe aus Eisen und Aluminiumverbindungen von 1,7 bis 41,2 Gew.-%, gerechnet als jeweiliges elementares Metall. Die bevorzugte Zusammensetzung einer Klärschlammasche enthält wenigstens eine Phosphatquelle mit jeweils zumindest 1 Gew.-% Anteil, bezogen auf die Klärschlammasche.

Die Klärschlammasche kann üblicherweise weitere typische Elemente enthalten, gerechnet auf das jeweilige Element vorzugsweise:
Calcium von 4 bis 38 Gew.-%,
Kalium von 0 bis 2 Gew.-%,
Magnesium von 0,1 bis 4 Gew.-%,
Natrium von 0,1 bis 4 Gew.-%
Phosphat PO₄³⁻von 4 bis 40 Gew.-%,
Schwefel von 0 bis 7 Gew.-%,
Silizium von 0 bis 24 Gew.-% und
Titan von 0 bis 2 Gew.-%.

Die Elemente machen zusammen, gerechnet als Oxide, vorzugsweise mehr als 70 Gew.-% der Klärschlammasche aus.

Die jeweiligen Komponenten können bevorzugt als Oxide oder Phosphate oder Sulfate vorliegen. Die Eisenverbindung liegt vorzugsweise zu 50-100 Gew.-% als Eisen(III)verbindung vor. Bevorzugt liegen 80 Gew.-% oder mehr der Phosphate als Metallphosphate des Aluminiums, Calciums oder Eisens vor.

Dazu enthält Klärschlammasche noch zahlreiche weitere Elemente in untergeordneten Mengen, hier sind vor allem Kupfer, Zink, Blei, Barium und Mangan zu nennen. Das oben angegebene Silicium liegt im wesentlich als Sand vor, vornehmlich aus den in Kläranlagen üblichen Filtrationsprozessen.

### Alkalichloride

Als Alkalichloride kommen vorzugsweise NaCl, KCl, LiCI, sowie Mischungen davon in Frage. Bevorzugt ist NaCl oder KCI oder eine Mischung von NaCl und KCl. Sofern NaCl in Mischung mit weiteren Alkalichloriden eingesetzt wird, insbesondere mit KCl, beträgt das Mischungsgewichtsverhältnis vorzugsweise von 10 : 1 bis 0,1 : 1, insbesondere von 5 : 1 bis 0,5 : 1.

Bevorzugt wird eingesetztes Alkalichlorid in einer Menge von 1 bis 5 Mol, bezogen auf jeweils 1 Mol der Summe der Mole von vorhandenem Eisen und Aluminium, beispielsweise bestimmt durch Elementanalytik.

Bevorzugt wird eingesetztes Alkalichlorid in einer Menge von 5:1 bis 1:1 (mol/mol) bezogen auf jeweils ein Mol der in der Mischung vorhandenen Summe aus Mol Eisen und Mol Aluminium, beispielsweise bestimmt über eine Elementanalytik, zum Beispiel durchgeführt per ICP-OES oder ICP-MS.

### Erdalkalichloride

Als Erdalkalichloride kommen insbesondere MgCl₂, CaCl₂ oder Mischungen davon in Frage. Bevorzugt ist MgCl₂.

Bevorzugt wird eine Mischung von Erdalkalichloriden und Alkalimetallchloriden, insbesondere MgCl₂ und NaCl und/oder KCI in einem Gewichtsverhältnis von 4 : 1 bis 0,25 : 1, insbesondere von 2 : 1 bis 0,5 : 1 eingesetzt. Besonders bevorzugt wird eine Mischung aus KCl, NaCl und MgCl₂ eingesetzt.

Ebenfalls besonders bevorzugt wird ein Gemisch von MgCl₂ und KCI mit einem Gewichtsverhältnis von 3 : 1 bis 0,5 : 1 eingesetzt.

### Sonstiges

Bevorzugt ist das Verfahren dadurch gekennzeichnet, dass das molare Verhältnis an Chlor aus den eingesetzten Alkalimetallchloriden und Erdalkalichloriden zu der in der Mischung vorhandenen Summe aus Eisen und Aluminium, gerechnet als Metall, vorzugsweise bestimmt über eine Elementanalytik, zum Beispiel durchgeführt per ICP-OES oder ICP-MS, 1 bis 6 beträgt.

Gegebenenfalls kann dem Schritt der thermischen Umsetzung ein Brikettieren, Pelletieren oder Extrudieren der Klärschlammasche, mit ggf. anschließender thermische Vorbehandlung bei 100 bis 199°C, bevorzugt als Mischung mit den entsprechenden Alkali- und/oder Erdalkalichloriden, vorausgehen. Hierfür können Hilfsmittel wie Schichtsilikate wie Bentonite, Ligninsulfonat, Methylcellulose, Wasserglas, Stärke oder andere verwendet werden.

### Verfahren

Die Einsatzstoffe, die Klärschlammasche, das/die einzusetzende(n) Alkalimetallchlorid(e) und/oder Erdalkalimetallchlorid(e) werden vorzugsweise in trockener Form in einem Mischer gemischt. Bevorzugt wird als Mischer Schaufelmischer oder Mühlen, wie etwa eine Kugelmühle, eingesetzt. Letztere haben den Vorteil, durch Zerkleinerung auch eine bessere Homogenisierung der eingesetzten Edukte zu erreichen. Ggf. schließt sich eine Formgebung durch Brikettierung, Pelletierung oder Extrudierung an.

Vorteilhaft ist es, bereits den Mischschritt der Edukte in einer Inertgasatmosphäre durchzuführen, vorzugsweise wasserfrei, um die möglicherweise enthaltenden hygroskopische Komponenten vor einer Wasseraufnahme zu schützen, die sich nachteilig auf die Prozessausbeute auswirken könnte.

Auch die Umsetzung an sich erfolgt bevorzugt unter Luft- und Wasserausschluss. Als bevorzugte Inertgase sind insbesondere Stickstoff, Argon oder Kohlendioxid zu nennen. Bevorzugt enthält die Inertgasatmosphäre weniger als 200 ppm, insbesondere weniger als 100 ppm Sauerstoff.

Die Umsetzung der eisen- und aluminiumverbindungshaltigen Klärschlammasche kann in einem Wirbelbett- oder Schüttbett- oder Fließbettreaktor, in einem Schachtofen oder in einem vorzugsweise gasdichten Ofen erfolgen, wie er am einfachsten als indirekt beheizter Rohrofen oder Drehrohrofen konzipiert werden kann. Die bei der Reaktion entstehenden, bei der Reaktionstemperatur flüchtigen Produkte, hier vor allem Eisenchlorid, aber auch Aluminiumchloride und ggf. weitere Schwermetallchloride, werden bevorzugt an einer kalten Stelle bei Temperaturen unter 150°C gemeinsam resublimiert und gesammelt oder an unterschiedlich kühlen Stellen resublimiert und getrennt gesammelt.

In einer bevorzugten Ausführungsform wird das gebildete Eisenchlorid aus dem Abgasstrom durch Resublimation und das Aluminiumchlorid aus dem Abgasstrom durch Resublimation isoliert.

Bevorzugte Abscheidetemperaturen sind für FeCl₂ kleiner als 700°C, insbesondere kleiner 700°C bis 307°C, für FeCl₃ kleiner 307°C, insbesondere 150°C bis 300°C und für AlCl₃ kleiner 150°C, insbesondere 110°C bis 149°C.

Das erfindungsgemäß wiedergewonnene Eisen in Form von Eisen(III)chlorid und/oder Eisen(II)chlorid ist bereits sehr rein und kann dann in die gewünschte Rohstoffform des Eisens überführt werden. Als Beispiele sind hier das Eisensulfat, Eisennitrat, Eisenphosphat oder die unterschiedlichsten Formen des Eisenoxids zu nennen.

Alternativ kann das Eisenchlorid, auch ohne dass es durch Resublimation abgeschieden wurde, direkt als Gasstrom in ein wässriges Medium, enthaltend Schwefelsäure, Salpetersäure oder Phosphorsäure, eingeleitet werden und dadurch zur Bildung entsprechender Eisen(III)sulfate, -nitrate oder -phosphate gebracht werden. Ggf. wird bei der Umsetzung ein geeignetes Reduktionsmittel mitverwendet, um zu einem Eisen(II)sulfat, Eisen(II)nitrat bzw. Eisen(II)phosphat zu gelangen.

Bevorzugt ist jedoch die Abtrennung von Eisenchlorid aus dem Abgasstrom durch Resublimation.

Alternativ kann das Aluminiumchlorid, auch ohne dass es durch Resublimation abgeschieden wurde, direkt als Gasstrom in ein wässriges Medium, enthaltend Schwefelsäure, Salpetersäure oder Phosphorsäure, eingeleitet werden und dadurch zur Bildung entsprechender Aluminiumsulfate, -nitrate oder -phosphate gebracht werden.

Bevorzugt ist jedoch die Abtrennung von Aluminiumchlorid aus dem Abgasstrom durch Resublimation.

Der Rückstand nach der Umsetzung enthält vorzugsweise Phosphate der eingesetzten Alkali- und/oder Erdalkalimetallgruppe, sowie ggf. weitere Phosphate, wie beispielsweise Ca₃(PO₄)₂.

Der erhaltene Rückstand wird vorzugsweise durch Zugabe von 0,1 bis 5 mol Phosphorsäure pro mol Phosphat, bevorzugt 0,2 bis 1 mol Phosphorsäure pro mol Phosphat behandelt. Der Rückstand der Reaktion kann so in eine wasserlösliche Salzform überführt werden, die sich als solche zum Einsatz in der Landwirtschaft eignet.

### Temperatur

Bevorzugt erfolgt die Umsetzung bei einer Temperatur von 400 bis 1000°C. Die Umsetzung dauert üblicherweise 5 Minuten bis 10 Stunden, bevorzugt 2 bis 5 Stunden.

### Verwendung des Rückstandes

Während natürliche Eisenphosphate vor allem in Eisenlagerstätten wie Magnetkieslagerstätten vorkommen, fallen beispielsweise Eisenphosphatverbindungen enthaltende Klärschlammaschen bei der Verbrennung von Klärschlamm an und bestehen zu einem hohen Prozentanteil (bis zu 40 Gew.-%) aus Phosphat.

In der Regel liegt die Klärschlammasche als Gemisch verschiedener Phosphate wie Calcium-, Eisen-, und Aluminiumphosphat vor. Die genaue Zusammensetzung beziehungsweise das Verhältnis der Metallkationen hängt davon ab, mit welcher Technologie die klärschlammproduzierenden Kläranlagen die Phosphatfällung durchführen. Eisenphosphat, das sehr häufig bei Fällprozessen in den Kläranlagen anfällt, ist dabei einer der verbreitetste Phosphatvertreter.

Ein Weg, das aus der Klärschlammasche enthaltene Phosphat pflanzenverfügbar zu machen, ist beispielsweise der Aufschluss mit HCl oder H₂SO₄, so wie zum Beispiel in EP 3 623 348 B1 beschrieben. In diesem Verfahren wird mit Lösungen gearbeitet, was zu einer schlechten Raum-Zeit-Ausbeute führt. Es werden zahlreiche Chemikalien eingesetzt, wie verschiedene Laugen, Säuren und Kalkmilch, die das Verfahren kompliziert und teuer machen. Filtrationsschritte wie den von Eisenhydroxid und Aluminiumhydroxid sind technisch aufwendig und damit kostenintensiv. Gleichzeitig entstehen große Mengen Abfall, da das eingesetzte Chlorid aus dem HCl nicht als Produkt abgegeben werden kann.

Auch thermische Verfahren werden erwähnt, so zum Beispiel Christian Adam et. al., (Materials Transactions, Vol. 48, No. 12 (2007) pp. 3056 - 3061).

Die Erfindungen betrifft daher auch ein Verfahren zur Herstellung von in Wasser löslichen Phosphatverbindungen mit einer Wasserlöslichkeit bei 20 °C von größer als 1 g/l, dadurch gekennzeichnet, dass man
i) eine Klärschlammasche enthaltend wenigstens eine Eisen- und Aluminiumverbindung mit wenigstens einem Alkalichlorid und/oder wenigstens einem Erdalkalichlorid bei einer Temperatur von 200 bis 1100°C in einer Inertgasatmosphäre, enthaltend vorzugsweise weniger als 200ppm Sauerstoff, umsetzt,
ii) das gebildete Eisenchlorid und Aluminiumchlorid im Abgasstrom ableiten, und
iii) den erhaltenden Rückstand durch Zugabe von 0,1 bis 5 mol einer Mineralsäure pro mol Phosphat im Rückstand, bevorzugt 0,2 bis 1 mol einer Mineralsäure pro mol Phosphat im Rückstand zu in Wasser löslichen Phosphatverbindungen behandelt.

Als Mineralsäure in Schritt iii) kommen zum Beispiel Schwefelsäure, Salzsäure, Salpetersäure und/oder Phosphorsäure in Frage, bevorzugt wird Phosphorsäure eingesetzt.

Der Rückstand der Reaktion kann so gemäß Schritt iii) in ein wasser- und/oder zitronensäurelösliches Salz überführt werden, das sich als solches zum Einsatz in der Landwirtschaft eignet.

Die Vorzugsbereiche für dieses Verfahren entsprechen auch den bereits oben angegebenen.

### Reaktor

Das nach dem erfindungsgemäßen Verfahren einzusetzende Material wird vorzugsweise in einen Reaktor gegeben, der vorzugsweise mit einer unter den einzustellenden Reaktionsbedingungen resistenten Schicht versehen ist. Bevorzugte Reaktormaterialien sind mit Nickel oder Grafit beschichtete Reaktoren. Als solche können Rohreaktoren wie Drehrohrreaktoren oder andere Reaktoren verwendet werden. Besonders bevorzugt sind Reaktoren, die eine Bewegung des Materials während der Reaktion erlauben, um eine möglichst effektive Kontaktaufnahme der Edukte und Wärmeverteilung zu erlauben. Dabei sind Wirbelbettvorrichtungen, sowie Drehrohrreaktoren oder eine Reaktion in einer Extrudervorrichtung mit Schneckenvortrieb bevorzugt.

Im Falle eines Rohrreaktors beträgt die Reaktorlänge vorzugsweise 0,2 bis 40 m. Die Verweilzeit im Reaktor während der Reaktion richtet sich in der Regel nach Temperatur und Kontaktmöglichkeit der Edukte zueinander. Dabei kann sich die Verweilzeit im Reaktor beispielsweise von einer Minute bis 5 Stunden hinziehen. Das erfindungsgemäße Verfahren kann als Batch oder kontinuierlich betrieben werden.

### Beispiele

### Analytik

Die Analytik wurde, nach Auflösen der Klärschlammasche-Probe in geeigneten Säuren, in einem ICP-OES untersucht, nach Kalibrierung für das jeweilige Element durch kalibrierte Standardlösungen der jeweiligen Elemente.

Röntgendiffraktogramme (XRD) wurden an Pulvern (Flachbett) in 2 Theta Winkeln zwischen 0 und 60° mit einer Wellenlänge von 0,154 nm aufgenommen.

### Beispiel 1:

6,8g Klärschlammasche (enthält laut XRD Eisen-Phosphor-Verbindungen, unter anderem Ca₉Fe(PO₄)₇, mit der Zusammensetzung (in Gewichtsprozent): 13% Fe, 1,5% Al, 6,8% Ca, 0,44 % Mg, 21% PO₄³⁻, 0,52 % Na) wird mit 1,4g KCl, 3,6g MgCl₂ und 1,6g NaCl vermischt und dann in einem, gegen eine wasserfreie Atmosphäre offenen, Tiegel erst auf 450°C gebracht und bei dieser Temperatur für 4h gehalten, dann auf 1000°C aufgeheizt und weitere 4h gehalten. Es wurde ein Gewichtsverlust von 21% festgestellt, der durch das Sublimieren von Eisenchlorid und Aluminiumchlorid bedingt ist.

Um auch den Rückstand verwerten zu können, wurde die Reaktionszeit verlängert, wobei ein eisenfreier Rückstand erhalten wird, der für die Verwendung in der Landwirtschaft eingesetzt werden kann.

Der erhaltene Rückstand weist charakteristische Reflexe im Röntgendiffraktogramm auf, die bei 32,3° 2Theta und 33,2° 2Theta (Wellenlänge: 1,54060 Angström) liegen.

Der erhaltene Rückstand wird mit 1,4g Phosphorsäure versetzt, um das entstandene Magnesiumphosphat und das vorhandene Calciumphosphat in die wasserlöslichen Formen zu überführen. Das Pulver wird einer Granulation unterworfen und hat einen addierten Eisen- und Aluminiumgehalt von unter 1 Gew-%, gerechnet als Elemente.

### Beispiel 2:

69g Klärschlammasche (enthält laut XRD unter anderem Ca₉Fe(PO₄)₇, mit der Zusammensetzung (in Gewichtsprozent) 13% Fe, 1,5% Al, 6,8% Ca, 0,44 % Mg, 21% PO₄³⁻, 0,52 % Na) werden mit 14g NaCl und 17g MgCl₂ (wasserfrei) innig trocken verrieben. 56,2g der roten Mischung werden in ein Quarzrohr gefüllt, das sofort, um die Aufnahme von Wasser aus der Luft zu vermeiden, mit trockenem Stickstoff gespült wird. Das Quarzrohr wird in einen Rohrofen eingelegt. Durch einen Motor wird das Quarzrohr während des Erhitzens oszillierend um etwa 200°/min um die eigene Achse gedreht, sodass das Pulverbett kontinuierlich in Bewegung ist. Gleichzeitig wird ein Gasstrom von 0,5l/min gereinigtem Stickstoff (Sauerstoff <200ppm v/v) durch das Rohr und damit auch über die Probe geleitet. Der Rohrausgang (=Gasaustritt) ist durch ein lose eingelegtes Stück Quarzwolle verengt.

Der Ofen und die Probe im Quarzrohr werden auf 1000°C (20K/min) erwärmt, während der Gasstrom und die oszillierende Drehbewegung aufrechterhalten wird. Nach 120 Minuten wird der Versuch beendet und Ofen und Probe werden unter weiterem Stickstofffluss auf Raumtemperatur abgekühlt. Das ursprünglich rote Pulver ist weiß geworden (47,2 g), gleichzeitig hat sich im Reaktorausgang im Bereich über 200°C ein gelblicher Niederschlag, im weiter von Ofen entfernten kälteren Bereich, bei etwa 100°C, ein weißes Sublimat gebildet. Es ist ein Gas entstanden, das mindestens teilweise aus HCl besteht, wie über ein Gasphasen-Infrarotspektroskopie nachgewiesen wurde.

Der im Rohr verbliebene, weiße Rückstand (Ausbeute 47,2g oder 84%) wird analytisch untersucht. Bezogen auf die eingesetzte Mischung wurden nur noch 41% des Fe, 64% des Al, 61 % des Mg und 72% des Na wiedergefunden.

Um auch den Rückstand verwerten zu können, wird die Reaktionszeit verlängert, wobei ein eisenfreier und aluminiumfreier Rückstand erhalten wird, der für die Verwendung in der Landwirtschaft eingesetzt werden kann.

Der Phosphormenge und die Calciummenge der Probe ändern sich durch die Reaktion nicht. Der erhaltene Rückstand weist charakteristische Reflexe im Röntgendiffraktogramm aus, die bei 32,3° 2Theta und 33,2° 2Theta (Wellenlänge: 1,54060 Angström) liegen.

Der erhaltene Rückstand wird mit einer 50g einer 85%igen Phosphorsäure versetzt, um das entstandene Magnesiumphosphat und das vorhandene Calciumphosphat in die wasserlöslichen Formen zu überführen. Das so erhaltene Gemisch kann, ggf. nach Granulation, für die Pflanzendüngung verwendet werden.

Bei dem erhaltene weißen Resublimat handelt es sich um Aluminiumchlorid, bei dem gelblichen Resublimat um Eisenchlorid, das beides getrennt abgesammelt werden kann und beides eine hohe Reinheit besitzt.

### Beispiel 3:

6,8g Klärschlammasche (enthält laut XRD unter anderem Ca₉Fe(PO₄)₇, mit der Zusammensetzung (in Gewichtsprozent): 13% Fe, 1,5% Al, 6,8% Ca, 0,44 % Mg, 21% PO₄³⁻, 0,52 % Na) wird mit 1,8 g MgCl₂ und 3,2 g KCI vermischt. Die rote Mischung wird in ein Quarzrohr gefüllt, das sofort, um die Aufnahme von Wasser aus der Luft zu vermeiden, mit trockenem Stickstoff gespült wird. Das Quarzrohr wird in einen Rohrofen eingelegt und eine halbe Stunde lang mit gereinigtem Stickstoff (0,5l/min, Sauerstoff <200ppm v/v) ausreichend gespült. Während des Versuches und des Temperaturanstieges durch die Ofenheizung wird der Gasstrom von 0,5l/min gereinigtem Stickstoff (Sauerstoff <200ppm v/v) durch das Rohr und die Probe beibehalten. Der aus dem Ofen herausragende, leere Rohrausgang (=Gasaustritt) wird auf 100°C gehalten und die Mischung im Glasrohr im Ofen auf 750°C erhitzt.

Das ursprünglich rote Pulver ist weiß geworden, gleichzeitig hat sich im Reaktorausgang im Bereich über 200°C ein gelblicher Niederschlag, im weiter von Ofen entfernten kälteren Bereich, bei etwa 100°C, ein weißes Sublimat gebildet. Bei dem erhaltenen weißen Sublimat handelt es sich um Aluminiumchlorid, bei dem gelblichen Sublimat um Eisenchlorid, das beides getrennt abgesammelt werden kann und beides eine hohe Reinheit besitzt.

Die Phosphormenge und die Calciummenge der Probe ändern sich durch die Reaktion nicht.

Der erhaltene Rückstand wird mit 50g einer 85%igen Phosphorsäure versetzt, um das entstandene Magnesiumphosphat und das vorhandene Calciumphosphat in die wasserlöslichen Formen zu überführen. Das so erhaltene Gemisch kann, ggf. nach Granulation, für die Pflanzendüngung verwendet werden.

Das ebenfalls erhaltenen Sublimat kann, ggf. nach Reinigung von unerwünschten Schwermetallen, wieder für die Phosphatfällung in Kläranlagen verwendet werden.

## Patentansprüche

1. Verfahren zur Herstellung von Eisen- und Aluminiumchlorid, **dadurch gekennzeichnet, dass** man
i) eine Klärschlammasche enthaltend wenigstens eine Eisen- und Aluminiumverbindung mit wenigstens einem Alkalichlorid und/oder wenigstens einem Erdalkalichlorid bei einer Temperatur von 200 bis 1100°C in einer Inertgasatmosphäre umsetzt und
ii) das gebildete Eisenchlorid und Aluminiumchlorid im Abgasstrom ableitet und isoliert.

2. Verfahren nach Anspruch 1, **dadurch gekennzeichnet, dass** aus dem Abgasstrom das Eisenchlorid in Schritt ii) durch Resublimation abgeschieden wird.

3. Verfahren nach wenigstens einem der Ansprüche 1 oder 2, **dadurch gekennzeichnet, dass** aus dem Abgasstrom das Aluminiumchlorid in Schritt ii) durch Resublimation abgeschieden wird.

4. Verfahren nach wenigstens einem der Ansprüche 1 bis 3, **dadurch gekennzeichnet, dass** die Klärschlammasche Eisen und Aluminiumverbindungen in einer Menge von in Summe von 1,7 bis 41,2 Gew.-%, gerechnet als jeweiliges elementares Metall, enthält.

5. Verfahren nach wenigstens einem der Ansprüche 1 bis 4, **dadurch gekennzeichnet, dass** die Umsetzung mit wenigstens einem Alkalichlorid und wenigstens einem Erdalkalichlorid erfolgt.

6. Verfahren nach wenigstens einem der Ansprüche 1 bis 5, **dadurch gekennzeichnet, dass** die Umsetzung mit Natriumchlorid und Magnesiumchlorid erfolgt.

7. Verfahren nach wenigstens einem der Ansprüche 1 bis 5, **dadurch gekennzeichnet, dass** die Umsetzung mit Kaliumchlorid und Magnesiumchlorid erfolgt.

8. Verfahren nach wenigstens einem der Ansprüche 1 bis 7, **dadurch gekennzeichnet, dass** die Klärschlammasche gerechnet auf das jeweilige Element
Calcium von 4 bis 38 Gew.-%,
Kalium von 0 bis 2 Gew.-%,
Magnesium von 0,1 bis 4 Gew.-%,
Natrium von 0,1 bis 4 Gew.-%
Phosphat PO₄³⁻4 bis 40 Gew.-%,
Schwefel von 0 bis 7 Gew.-%,
Silizium von 0 bis 24 Gew.-% und
Titan von 0 bis 2 Gew.-% enthält.

9. Verfahren nach wenigstens einem der Ansprüche 1 bis 8, **dadurch gekennzeichnet, dass** eine Mischung von Erdalkalichloriden und Alkalimetallchloriden, in einem Gewichtsverhältnis von 4 : 1 bis 0,25 : 1, insbesondere von 2 : 1 bis 0,5 : 1 eingesetzt wird.

10. Verfahren nach wenigstens einem der Ansprüche 1 bis 9, **dadurch gekennzeichnet, dass** das molare Verhältnis an Chlor aus den eingesetzten Alkalimetallchloriden und Erdalkalichloriden zu der in der Mischung vorhandenen Summe aus Eisen und Aluminium, gerechnet als Metall, von 1 bis 6 beträgt.

11. Verfahren nach wenigstens einem der Ansprüche 1 bis 10, **dadurch gekennzeichnet, dass** die Umsetzung bei einer Temperatur von 400 bis 1000°C erfolgt.

12. Verfahren zur Herstellung von in Wasser löslichen Phosphatverbindungen mit einer Wasserlöslichkeit bei 20 °C von größer als 1 g/l, **dadurch gekennzeichnet, dass** man
i) eine Klärschlammasche enthaltend wenigstens eine Eisen- und Aluminiumverbindung mit wenigstens einem Alkalichlorid und/oder wenigstens einem Erdalkalichlorid bei einer Temperatur von 200 bis 1100°C in einer Inertgasatmosphäre umsetzt,
ii) das gebildete Eisenchlorid und Aluminiumchlorid im Abgasstrom ableiten, und
iii) den erhaltenden Rückstand durch Zugabe von 0,1 bis 5 mol einer Mineralsäure pro mol Phosphat im Rückstand, bevorzugt 0,2 bis 1 mol Mineralsäure pro mol Phosphat im Rückstand zu in Wasser löslichen Phosphatverbindungen behandelt.

## Claims

1. Process for producing iron chloride and aluminium chloride, **characterized in that** it comprises
i) reacting a sewage sludge ash containing at least one iron compound and aluminium compound with at least one alkali metal chloride and/or at least one alkaline earth metal chloride at a temperature of 200°C to 1100°C in an inert gas atmosphere and
ii) withdrawing and isolating the formed iron chloride and aluminium chloride in the offgas stream.

2. Process according to Claim 1, **characterized in that** the iron chloride is deposited from the offgas stream by resublimation in step ii).

3. Process according to at least one of Claims 1 or 2, **characterized in that** the aluminium chloride is deposited from the offgas stream by resublimation in step ii).

4. Process according to at least one of Claims 1 to 3, **characterized in that** the sewage sludge ash contains iron and aluminium compounds in an amount summing to 1.7% to 41.2% by weight, calculated as the respective elemental metal.

5. Process according to at least one of Claims 1 to 4, **characterized in that** the reaction is carried out with at least one alkali metal chloride and at least one alkaline earth metal chloride.

6. Process according to at least one of Claims 1 to 5, **characterized in that** the reaction is carried out with sodium chloride and magnesium chloride.

7. Process according to at least one of Claims 1 to 5, **characterized in that** the reaction is carried out with potassium chloride and magnesium chloride.

8. Process according to at least one of Claims 1 to 7, **characterized in that** the sewage sludge ash contains, calculated for the respective element,
calcium from 4% to 38% by weight,
potassium from 0% to 2% by weight,
magnesium from 0.1% to 4% by weight,
sodium from 0.1% to 4% by weight,
phosphate P0₄³⁻ 4% to 40% by weight,
sulfur from 0% to 7% by weight,
silicon from 0% to 24% by weight and
titanium from 0% to 2% by weight.

9. Process according to at least one of Claims 1 to 8, **characterized in that** a mixture of alkaline earth metal chlorides and alkali metal chlorides in a weight ratio of 4:1 to 0.25:1, in particular of 2:1 to 0.5:1 is employed.

10. Process according to at least one of Claims 1 to 9, **characterized in that** the molar ratio of chlorine from the employed alkali metal chlorides and alkaline earth metal chlorides to the sum of iron and aluminium present in the mixture, calculated as metal, is from 1 to 6.

11. Process according to at least one of Claims 1 to 10, **characterized in that** the reaction is carried out at a temperature of 400°C to 1000°C.

12. Process for producing water-soluble phosphate compounds having a water solubility at 20°C of greater than 1 g/l, **characterized in that** it comprises
i) reacting a sewage sludge ash containing at least one iron compound and aluminium compound with at least one alkali metal chloride and/or at least one alkaline earth metal chloride at a temperature of 200°C to 1100°C in an inert gas atmosphere,
ii) withdrawing the formed iron chloride and aluminium chloride in the offgas stream and
iii) treating the obtained residue by addition of 0.1 to 5 mol of a mineral acid per mole of phosphate in the residue, preferably 0.2 to 1 mol of mineral acid per mole of phosphate in the residue, to afford water-soluble phosphate compounds.

## Revendications

1. Procédé de préparation de chlorure de fer et de chlorure d'aluminium, **caractérisé en ce qu'**on
i) transforme une boue d'épuration incinérée contenant au moins un composé de fer et d'aluminium avec au moins un chlorure de métal alcalin et/ou au moins un chlorure de métal alcalino-terreux à une température de 200 à 1100°C dans une atmosphère de gaz inerte et
ii) évacue et isole le chlorure de fer et le chlorure d'aluminium formés dans le flux d'effluents gazeux.

2. Procédé selon la revendication 1, **caractérisé en ce que** le chlorure de fer est séparé du flux d'effluents gazeux dans l'étape ii) par resublimation.

3. Procédé selon au moins l'une des revendications 1 ou 2, **caractérisé en ce que** le chlorure d'aluminium est séparé du flux d'effluents gazeux dans l'étape ii) par resublimation.

4. Procédé selon au moins l'une des revendications 1 à 3, **caractérisé en ce que** la boue d'épuration incinérée contient des composés de fer et d'aluminium en une quantité d'au total 1,7 à 41,2% en poids, calculés sous forme de métal élémentaire respectif.

5. Procédé selon au moins l'une des revendications 1 à 4, **caractérisé en ce que** la transformation est effectuée avec au moins un chlorure de métal alcalin et au moins un chlorure de métal alcalino-terreux.

6. Procédé selon au moins l'une des revendications 1 à 5, **caractérisé en ce que** la transformation est effectuée avec du chlorure de sodium et du chlorure de magnésium.

7. Procédé selon au moins l'une des revendications 1 à 5, **caractérisé en ce que** la transformation est effectuée avec du chlorure de potassium et du chlorure de magnésium.

8. Procédé selon au moins l'une des revendications 1 à 7, **caractérisé en ce que** la boue d'épuration incinérée contient, calculés par rapport à l'élément respectif, du calcium à raison de 4 à 38% en poids,
du potassium à raison de 0 à 2% en poids,
du magnésium à raison de 0,1 bis 4% en poids,
du sodium à raison de 0,1 à 4% en poids,
du phosphate PO₄³⁻ à raison de 4 à 40% en poids,
du soufre à raison de 0 à 7% en poids,
du silicium à raison de 0 à 24% en poids et
du titane à raison de 0 à 2% en poids.

9. Procédé selon au moins l'une des revendications 1 à 8, **caractérisé en ce qu'**un mélange de chlorures de métal alcalino-terreux et de chlorures de métal alcalin dans un rapport pondéral de 4:1 à 0,25:1, en particulier de 2:1 à 0,5:1, est utilisé.

10. Procédé selon au moins l'une des revendications 1 à 9, **caractérisé en ce que** le rapport molaire de chlore provenant des chlorures de métal alcalin et des chlorures de métal alcalino-terreux utilisés à la somme de fer et d'aluminium présente dans le mélange, calculés sous forme de métal, est de 1 à 6.

11. Procédé selon au moins l'une des revendications 1 à 10, **caractérisé en ce que** la transformation est effectuée à une température de 400 à 1000°C.

12. Procédé de préparation de composés de phosphate solubles dans l'eau, présentant une solubilité dans l'eau à 20°C supérieure à 1 g/l, **caractérisé en ce qu'**on
i) transforme une boue d'épuration incinérée contenant au moins un composé de fer et d'aluminium avec au moins un chlorure de métal alcalin et/ou au moins un chlorure de métal alcalino-terreux à une température de 200 à 1100°C dans une atmosphère de gaz inerte,
ii) évacue le chlorure de fer et le chlorure d'aluminium formés dans le flux d'effluents gazeux et
iii) traite le résidu obtenu par ajout de 0,1 à 5 moles d'un acide minéral par mole de phosphate dans le résidu, de préférence de 0,2 à 1 mole d'acide minéral par mole de phosphate dans le résidu, en composés de phosphate solubles dans l'eau.
